# EUROPÄISCHE PATENTSCHRIFT

(11) **EP 3 127 454 B1**
(45) Veröffentlichungstag und Bekanntmachung des Hinweises auf die Patenterteilung: **28.11.2018**
(21) Anmeldenummer: 16182601.1
(22) Anmeldetag: 03.08.2016
(51) Int. Cl.: A47B 95/02, E05B 1/00, F16B 21/07

(54) **KOMBINATION AUS EINER VORRICHTUNG ZUR ANBRINGUNG VON DESIGNELEMENTEN UND EINEM DESIGNELEMENT**
COMBINATION OF DEVICE FOR APPLYING DESIGN ELEMENTS AND A DESIGN ELEMENT
COMBINAISON D'UN DISPOSITIF D'APPLICATION D'ELEMENTS DE DESIGN ET D'UN ELEMENT DE DESIGN

(30) Priorität: 03.08.2015 DE 202015104048 U
(43) Veröffentlichungstag der Anmeldung: 08.02.2017
(73) Patentinhaber: Auer, Christopher, 58638 Isarlohn (DE)
(72) Erfinder: Pendolino, Merchiorre, 58640 Iserlohn (DE); Glaser, Frank, 58640 Iserlohn (DE)
(74) Vertreter: Patentanwälte Dörner & Kötter PartG mbB

(56) Entgegenhaltungen:
- US-A- 600 849
- US-A- 1 958 165
- US-A- 2 142 791
- US-A1- 2010 218 346

## Beschreibung

Die Erfindung betrifft eine Kombination aus einer Vorrichtung zur Anbringung von Designelementen und einem Designelement, die Vorrichtung bestehend aus einer Kappe, die von einem Formteil gebildet ist, an dessen einen Ende eine Aufnahme für das Designelement vorgesehen ist. Die Anbringung von Designelementen zur Verzierung von Gegenständen, Möbeln und dergleichen ist allgemein bekannt, beispielsweise aus der US 2,142,791 A. Die Designelemente sind üblicherweise auf die Gegenstände geklebt, auf diese gedruckt oder auch in diese eingraviert. Sie führen zu einer Erhöhung der Attraktivität der jeweiligen Gegenstände. Nachteilig dabei ist jedoch, dass die Designelemente nicht austauschbar sind, so dass einmal vorgesehene Designelemente gar nicht oder nur mit sehr hohem Aufwand verändert werden können.

Hier will die Erfindung Abhilfe schaffen. Der Erfindung liegt die Aufgabe zu Grunde, eine Vorrichtung zur Anbringung von Designelementen zu schaffen, die ein Austauschen der Designelemente ermöglicht. Gemäß der Erfindung wird diese Aufgabe durch eine Kombination einer Vorrichtung zur Anbringung eines Designelements und einem Designelement nach Anspruch 1 gelöst.

Mit der Erfindung ist eine Vorrichtung zur Anbringung von Designelementen geschaffen, die neben einer Verzierung der Gegenstände eine Austauschbarkeit ermöglicht. Dies ist durch die lösbare Verbindung zwischen dem Befestigungselement und dem jeweiligen Designelement ermöglicht, so dass die Verzierung durch das Designelement gewechselt werden kann, wenn beispielsweise das Design nicht mehr zeitgemäß ist.

Erfindungsgemäß ist die lösbare Befestigung nach Art einer Druckknopfverbindung gebildet. Diese Art der Verbindung stellt eine einfache und zugleich zuverlässige Anbringung der Designelemente an den Gegenständen bereit. Insbesondere ist der Austausch der Designelemente, also das Lösen und Befestigen der Designelemente bei der gewählten Verbindung ohne Werkzeug möglich.

Erfindungsgemäß weist das Befestigungsmittel des Designelements einen Schaft auf, der an seinem freien Ende mit einem Kopf versehen ist und das Befestigungselement der Aufnahme eine Feder, deren Federwirkung im Wesentlichen parallel zum Boden der Aufnahme ausgerichtet ist. Diese Art der Ausgestaltung der Druckknopfverbindung hat sich als außerordentlich zuverlässig und gleichzeitig leicht bedienbar erwiesen.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

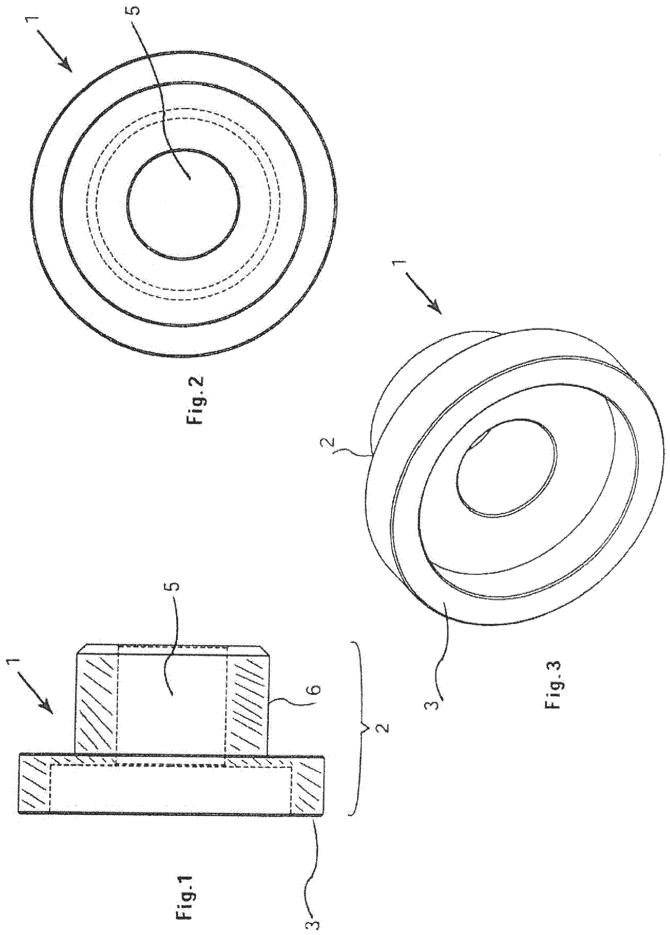

- Figur 1: den Längsschnitt durch eine Kappe;
- Figur 2: die stirnseitige Ansicht der in Figur 1 dargestellten Kappe;
- Figur 3: die dreidimensionale Darstellung der in Figur 1 dargestellten Kappe;

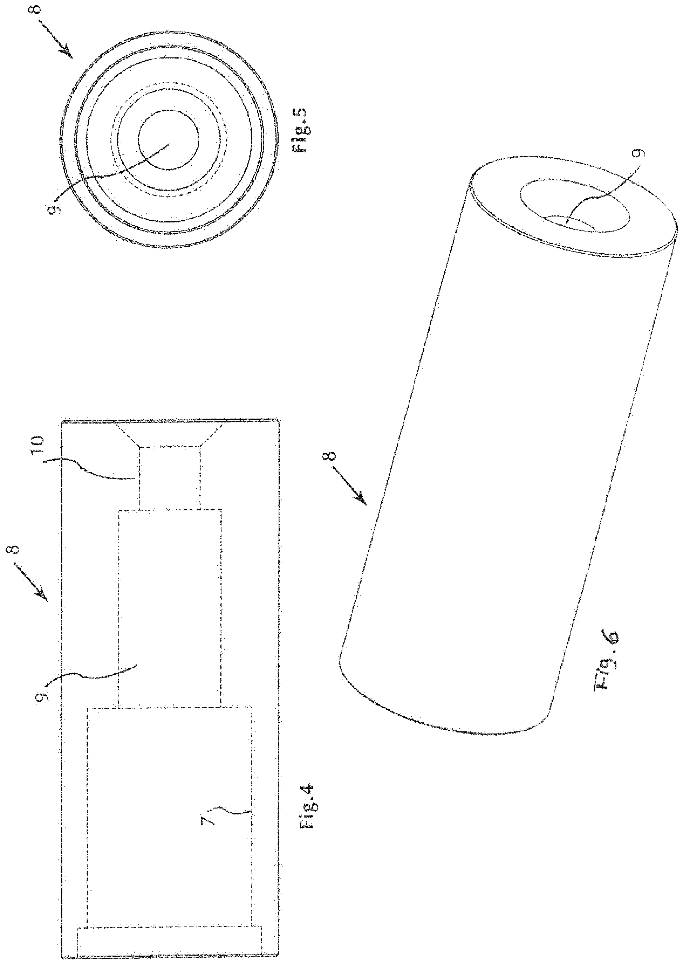

- Figur 4: den Längsschnitt durch einen Bolzen;
- Figur 5: die stirnseitige Ansicht des in Figur 4 dargestellten Bolzens;
- Figur 6: die dreidimensionale Darstellung des in Figur 4 dargestellten Bolzens;

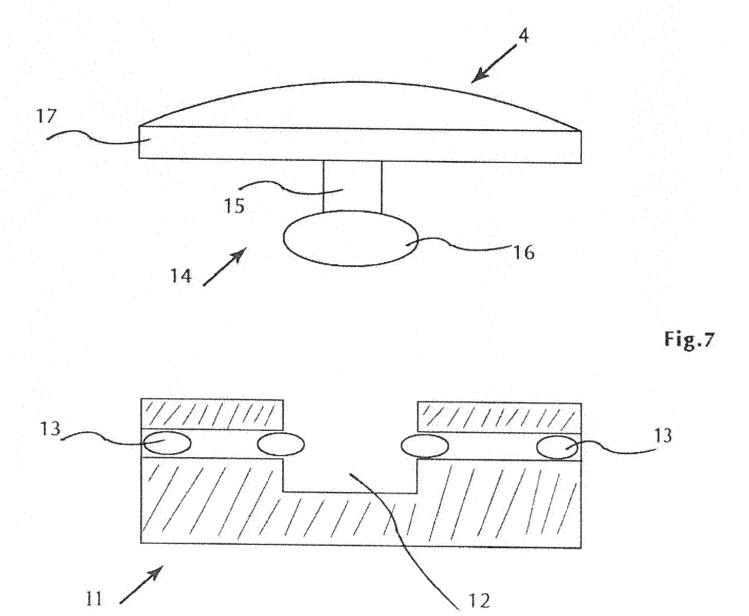

- Figur 7: die explosionsartige Darstellung des Designelements und des Befestigungsmittels.

Die als Ausführungsbeispiel gewählte Vorrichtung zur Anbringung von Designelementen besteht aus einer Kappe 1, die von einem Formteil 2 gebildet ist. Das Formteil 2 besteht im Ausführungsbeispiel aus einem Zylinder und einer Aufnahme 3, die an einem Ende des Zylinders vorgesehen ist. Die Aufnahme 3 ist für die Anbringung eines Designelementes 4 vorgesehen. Die Aufnahme 3 ist napfartig ausgebildet. Sie ist an ihrem Boden mit einer Bohrung 5 versehen, die im Ausführungsbeispiel das Formteil 2 durchsetzt. Im Ausführungsbeispiel weist der Zylinder des Formteils 2 ein Außengewinde 6 auf.

Das Außengewinde 6 korrespondiert in montiertem Zustand mit einem Innengewinde 7 eines Bolzens 8. Der Bolzen 8 ist mit einer mehrfach abgesetzten Bohrung 9 versehen die an ihrem dem Innengewinde 7 abgewandten Ende mit einem zweiten Innengewinde 10 versehen ist.

Der Boden der Aufnahme 3 weist ein Befestigungselement 11 auf, welches eine im Wesentlichen scheibenförmige Ausbildung hat. Das Befestigungselement 11 hat einen Außendurchmesser, der im Wesentlichen der lichten Weite der Aufnahme 3 entspricht. Die Höhe des Befestigungselements 11 entspricht im Wesentlichen der Tiefe der napfartig ausgebildeten Aufnahme 3. Das Befestigungselement 11 ist im Ausführungsbeispiel in die Aufnahme 3 geklebt. Andere Befestigungsmöglichkeiten sind ebenfalls möglich. So besteht beispielsweise die Möglichkeit, die Bohrung 5 mit einem Innengewinde zu versehen und an dem Befestigungselement 11 auf der dem Boden der Aufnahme 3 zugewandten Seite einem Stift vorzusehen, welcher ein Außengewinde aufweist, um auf diese Weise das Befestigungselement 11 mit der Kappe 1 zu verschrauben. Andere Befestigungsmöglichkeiten sind ebenfalls möglich.

In dem Befestigungselement 11 ist eine Vertiefung 12 ausgebildet. In der Vertiefung 12 weist das Befestigungselement 11 mindestens eine Feder 13 auf, deren Federwirkung im Wesentlichen parallel zum Boden der Aufnahme 3 ausgerichtet ist. Im Ausführungsbeispiel sind zwei Federn 13 vorgesehen, die nach Art von Ringen ausgebildet sind. Es besteht auch die Möglichkeit, anders geformte Federn in dem Befestigungselement 11 anzuordnen, beispielsweise S-förmige Federn.

Das Designelement 4 hat ein Befestigungsmittel 14, welches in montiertem Zustand mit dem Befestigungselement 11 korrespondiert. Das Befestigungsmittel 14 weist einen Schaft 15 auf, der an seinem freien Ende mit einem Kopf 16 versehen ist. An dem dem Kopf 16 abgewandten Ende des Schafts 15 ist eine Tellerförmige Platte 17 vorgesehen, die auf ihrer dem Kopf 16 abgewandten Seite - der Ansichtsseite - das Design enthält. Dabei kann es sich um jede Art von Motiv handeln. Auch Logos, Werbeaufschriften oder dergleichen können auf der Ansichtsseite des Designelements wiedergegeben sein. Auch das Anbringen von Steinen oder dreidimensionalen reliefartigen Strukturen ist möglich. Der Gestaltung sind hier keine Grenzen gesetzt.

Im Ausführungsbeispiel ist die erfindungsgemäße Vorrichtung in einfacher Weise zusammenbaubar. Zunächst wird in die Kappe 1 das Befestigungselement 11 eingesetzt und an dem Boden der Aufnahme 3 befestigt, vorzugsweise verklebt. Sodann wird die Kappe 1 mit dem Außengewinde 6 des Formteils 2 in das Innengewinde 7 des Bolzens 8 eingeschraubt. Zur Befestigung des Bolzens 8 an einem Gegenstand, beispielsweise einer Wand, einem Möbelstück oder einer Tür, wird in die Wand oder Tür ein Schraubelement eingeschraubt. Das Schraubelement hat in bekannter Weise auf der einen Seite ein Holzgewinde und auf der anderen Seite ein Metallgewinde, das bei der Montage mit dem Innengewinde 10 im Bolzen 8 korrespondiert. Nach Befestigung der Vorrichtung an der Wand, dem Möbelstück oder der Tür ist so ein Kleiderhaken geschaffen. Alternativ besteht im Falle der Montage der Vorrichtung beispielsweise an einer Tür oder einer Schublade auch die Möglichkeit, eine mit einem Metallgewinde versehene Schraube durch ein Loch in der Tür oder Schublade zu schieben und den Bolzen 8 aufzuschrauben. Die Schraube stützt sich dann auf der der Vorrichtung abgewandten Seite mit ihrem Schraubenkopf an der Tür oder Schublade ab. In Abwandlung des Ausführungsbeispiels besteht weiterhin die Möglichkeit, auf den Bolzen 8 zu verzichten. Es ist nämlich auch möglich, den Zylinder des Formteils 2 vergleichbar zum Bolzen 8 auszubilden, so dass die Kappe 1 mit ihrem Formteil 2 unmittelbar an dem jeweiligen Gegenstand anbringbar ist. Die Kappe 1 mit dem so gestalteten Zylinder bildet dann eine einteilige Gestaltung des Formteils 2 und des Bolzens 8. An dem dem Innengewinde 10 abgewandten Ende ist in diesem Fall die Aufnahme 3 ausgebildet. Die Länge des Bolzens 8 beziehungsweise bei dessen Weglassen die Länge des Formteils 2 ist dabei frei wählbar und kann im einfachsten Fall lediglich von der Höhe der Aufnahme 3 bestimmt sein. In diesem Fall ist das Formteil 2 allein von der Aufnahme 3 gebildet.

Zur Befestigung des Designelements 4 wird dies in einfacher Weise in axialer Richtung in das Befestigungselement 11 gedrückt. Dabei tritt der Kopf 16 mit den Federn 13 in Kontakt. Aufgrund der abgerundeten Form des Kopfes 16 weichen die Federn 13 aus, so dass der Kopf 16 den Bereich der Federn 13 passieren kann. Nach Passieren der Federn 13 fahren diese wieder in ihre Ausgangsposition zurück, so dass das Designelement 4 durch die dann wieder in die Vertiefung 12 hervorstehenden Federn 13 sicher gehalten ist. Vergleichbar zum Befestigen des Designelementes erfolgt das Lösen des Designelementes, jedoch in umgekehrter Richtung. Beim Ziehen an dem Designelement 4 weichen die Federn 13 aufgrund der abgerundeten Form des Kopfes 16 wieder aus, so dass das Designelement 4 herausgezogen werden kann. Auf diese Weise ist ein einfacher Austausch von Designelementen ohne Werkzeug möglich. Ersichtlich ist die lösbare Befestigung des Designelements 4 nach Art einer Druckknopfverbindung gebildet.

Die erfindungsgemäße Vorrichtung ist vielfältig einsetzbar. Neben der oben beschriebenen Möglichkeit des Einsatzes als Kleiderhaken besteht auch die Möglichkeit, sie als Griff für Schubladen oder Türen usw. zu verwenden. Auch der Einsatz als Bilderhalter o. dgl. ist möglich. Durch die Auswechselbarkeit der Designelemente ist eine schnelle und einfache Änderung des Designs der jeweiligen Gegenstände möglich. Gleichzeitig ist jedoch gewährleistet, dass die Designelemente sicher gehalten sind. Zudem ist das Design der erfindungsgemäßen Vorrichtung auch dadurch abwandelbar, dass anstelle einer kreisrunden Ausgestaltung des Formteils 2, des Bolzens 6 usw. eine eckige Gestaltung zur Anwendung kommen kann. Hierbei kann im einfachsten Fall eine quadratische Gestaltung gewählt werden. Aber auch dreieckige oder andere mehreckige Designs des Formteils 2 und des Bolzens 6 können Anwendung finden. Zudem ist eine ovale Form möglich.

## Patentansprüche

1. Kombination aus einer Vorrichtung zur Anbringung von Designelementen und einem Designelement, die Vorrichtung bestehend aus einer Kappe (1), die von einem Formteil (2) gebildet ist, an dessen einen Ende eine Aufnahme (3) für das Designelement (4) vorgesehen ist, wobei der Boden der Aufnahme (3) mindestens ein Befestigungselement (11) aufweist, welches mit einem Befestigungsmittel (14) an dem Designelement (4) korrespondiert, und dass das Befestigungselement (11) und das Befestigungsmittel (14) des Designelements (4) eine lösbare Befestigung bereitstellen und die lösbare Befestigung nach Art einer Druckknopfverbindung gebildet ist, wobei das Befestigungsmittel (14) des Designelements (4) einen Schaft (15) aufweist, der an seinem freien Ende mit einem Kopf (16) versehen ist und das Befestigungselement (11) mindestens eine Feder (13) aufweist, deren Federwirkung im Wesentlichen parallel zum Boden der Aufnahme (3) ausgerichtet ist, **dadurch gekennzeichnet, dass** die Feder (13) in einer Hinterschneidung im Befestigungselement (11) angeordnet ist.

2. Kombination nach Anspruch 1, **dadurch gekennzeichnet, dass** die Aufnahme (3) napfartig ausgebildet ist.

3. Kombination nach Anspruch 1 oder 2, **dadurch gekennzeichnet, dass** die Aufnahme (3) an ihrem Boden mit einer Bohrung (5) versehen ist, die das Formteil (2) durchsetzt.

## Claims

1. Combination of a device for applying design elements and a design element, the device consisting of a cap (1), which is formed by a moulded part (2), at one end of which a receptacle (3) for the design element (4) is provided, wherein the bottom of the receptacle (3) has at least one fastening element (11), which corresponds with a fastener (14) on the design element (4) and the fastening element (11) and the fastener (14) of the design element (4) provide a detachable fastening and the detachable fastening is formed in the manner of a snap fastener connection, wherein the fastener (14) of the design element (4) has a shaft (15), which is provided with a head (16) at its free end and the fastening element (11) has at least one spring (13), the spring effect of which is substantially aligned parallel to the bottom of the receptacle (3), **characterised in that** the spring (13) is arranged in an undercut in the fastening element (11).

2. Combination according to claim 1, **characterised in that** the receptacle (3) is of cup-shaped design.

3. Combination according to claim 1 or 2, **characterised in that** the receptacle (3) is provided with a bore (5) at its bottom, which penetrates the moulded part (2).

## Revendications

1. Combinaison d'un dispositif d'application d'éléments décoratifs et d'un élément décoratif, sachant que le dispositif comprend une coiffe (1) formée par une pièce moulée (2) à une extrémité de laquelle est prévu un réceptacle (3) pour l'élément décoratif (4), sachant que le fond du réceptacle (3) présente au moins un élément de fixation (11) qui épouse un moyen de fixation (14) situé contre l'élément décoratif (4), et sachant que l'élément de fixation (11) et le moyen de fixation (14) de l'élément décoratif (4) fournissent une fixation détachable et que la fixation détachable a la forme d'une jonction par bouton-pression, sachant que le moyen de fixation (14) de l'élément décoratif présente une tige (15) qui à son extrémité libre est munie d'une tête (16) et sachant que l'élément de fixation (11) présente au moins un ressort (13) dont l'effet ressort est orienté pour l'essentiel parallèle au fond du réceptacle (3), **caractérisé en ce que** le ressort (13) est disposé dans une contre-dépouille ménagée dans l'élément de fixation (11).

2. Combinaison selon la revendication 1, **caractérisée en ce que** le réceptacle (3) est configuré en écuelle.

3. Combinaison selon la revendication 1 ou 2, **caractérisé en ce que** le réceptacle (3) est muni sur son fond d'un alésage (5) traversant la pièce moulée (2).
